# EUROPEAN PATENT SPECIFICATION

(11) **EP 3 352 579 B1**
(45) Date of publication and mention of the grant of the patent: **06.03.2019**
(21) Application number: 16753395.9
(22) Date of filing: 18.08.2016
(51) Int. Cl.: A23L 23/10

(54) **A SHAPED SAVOURY CONCENTRATE ARTICLE**
GEFORMTER, WOHLSCHMECKENDER KONZENTRATARTIKEL
ARTICLE DE CONCENTRÉ SAVOUREUX FAÇONNÉ

(30) Priority: 25.08.2015 EP 15182270
(43) Date of publication of application: 01.08.2018
(73) Proprietor: Unilever NV, 3013 AL Rotterdam (NL); Unilever PLC, London, Greater London EC4Y 0DY (GB)
(72) Inventor: JANSEN, Jeoffrey, Nikolai, 3133 AT Vlaardingen (NL); VELIKOV, Krassimir, Petkov, 3133 AT Vlaardingen (NL); VOUDOURIS, Panayiotis, 3133 AT Vlaardingen (NL)
(74) Representative: van den Brom, Coenraad Richard
(86) International application number: PCT/EP2016/069601
(87) International publication number: WO 2017/032685

(56) References cited:
- EP-A1- 2 415 357
- WO-A1-03/000077
- WO-A1-2004/017762
- WO-A1-2006/087090

## Description

### TECHNICAL FIELD OF THE INVENTION

The present invention relates to a shaped savoury concentrate article, more particularly a shaped savoury concentrate article that can be used in the preparation of broths, bouillons, soups, sauces, gravies etc., or that can be used as a garnish or seasoning. The shaped concentrate article can be provided in the form of, for instance, cubes, tablets or pellets.

The shaped concentrate article of the present invention has a water content of not more than 10 wt.%, contains 50-95 wt.% particulate seasoning components (e.g. salt and/or glutamate); 2-30 wt.% oil and 2-20 wt.% of prolamin particles having a sphere equivalent mean diameter of less than 20 µm. Even if the shaped concentrate article has a high content of liquid oil, little or no oil exudation is observed.

The present invention also provides process of preparing a shaped savoury concentrate article, said process comprising:
- providing a savoury concentrate mixture containing particulate seasoning components, oil and prolamin particles; and
- compressing said savoury concentrate mixture to form a shaped savoury concentrate article.

### BACKGROUND OF THE INVENTION

The use of bouillon cubes to provide taste in soups, gravies, sauces and other similar food products is well known. Bouillon cubes typically contain salt, sugar, fat, thickeners, herbs, spices, taste enhancer (e.g. glutamate) and flavouring.

A first type of cube is a high fat content cube which typically contains 20-30 wt.% solid fat. These cubes disperse rapidly because the heat of the water melts the fat holding the cubes together.

A second type of bouillon cube is produced by compressing a bouillon powder into the shape of a cube. These cubes usually contain up to 10 wt.% solid fat. Such cubes typically take several minutes to disperse in hot water.

Bouillon cubes should have sufficient coherence and rigidity to retain shape during transportation and handling. Furthermore, the cubes should not exhibit oil exudation and they should disperse in hot water.

Attempts have been made to reduce the amount of saturated fat in bouillon cubes by replacing the solid fat with liquid vegetable oil.

WO 03/000077, for instance, describes a soft bouillon and/or seasoning tablet, which comprises, in total tablet weight %, from 3 to 60% of an oil, and possibly fat, up to 70% of a fine filler, up to 79% of a coarse filler, and, in total oil and fat weight %, up to 80% fat, as well as optionally spices, flavours, dehydrated vegetables, herb leafs and/or plant extracts. The fine filler preferably is a milled crystalline ingredient selected from salt, glutamate and/or sugar and has a mean diameter of 5-120 µm.

WO 03/003858 describes a hard bouillon and/or seasoning tablet which comprises, in total tablet weight %, from 1 to 20% of an oil and possibly fat, up to 80% of a milled filler, up to 95% of a non milled filler, from 4 to 35% of a stickening or sticking agent, and, in total oil and fat weight %, up to 80% fat, as well as optionally spices, flavours, dehydrated vegetables, herb leafs and/or plant extracts. The stickening or sticking agent may comprise ingredients the addition of which (combined with an adequate increase of the Aw value) may impart a glass transition temperature to the final mixture which may be relatively easily exceeded during tableting. Such ingredients may comprise meat extract, processed flavours and/or maltodextrin, for example.

WO 2004/049831 describes a hard bouillon and/or seasoning tablet or cube which comprises, in total tablet weight %, from 1 to 10 % of liquid oil, from 10 to 80 % of crystals, up to 30 % of a filler, from 1 to 20 % of a sticking agent, and, in total liquid oil and solid fat weight %, up to 80 % solid fat, as well as optionally spices, flavours, dehydrated vegetables, herb leafs and/or plant extracts. The sticking agent allows to obtain a certain tablet physical stability by slightly raising the moisture of the mass. As sticking agent reaction flavors and/or other flavor powders, vegetable powders (e.g. onion and
garlic powder), meat extract and maltodextrins may be used.

WO 2007/085609 describes a bouillon and/or seasoning tablet and/or cube, which comprises, in total % in weight, 0.5-10 % oil, and/or 0-5 % fat, binders, salt, between 1 and 5 % of total water, as well as between 0.5 and 8 % of cereal, vegetable and/or fruit fibers, as well as optionally sugar, spices, flavors, taste enhancers, dehydrated vegetables, herb leaves and/or plant extracts. The binders are taken from the group consisting of dextrose syrup, maltodextrin, citric acid, meat extract and processed flavors.

WO 2006/087090 describes a granule comprising: a) solid micronized lipid powder particles that have a microporous structure; and b) a liquid. Wherein the granule is an agglomeration of said lipid particles herein described as secondary particles; and said secondary particles are agglomerates of primary liquid particles, said primary lipid particles are platelets having an average thickness of 0.01-0.5 µm and wherein the liquid comprises sterol. The granule may be combined with particulate matter to prepare bouillon or seasoning cubes.
WO 2004/017762 describes a savoury particle comprising:
- 0.1-80% (wt) salt and/or MSG;
- 20-99% (wt) of one or more sugars and/or polyols;
- 0.05-50% (wt) flavouring ingredient;
The savoury particle is in a glassy state and which particle has a volume of at least 0.5 ml. The particle may further comprise meat, meat extracts, protein, hydrolysed protein, vegetable matter, plant extracts, yeast extracts and/or mixtures thereof.

EP2415357 A1 describes a food product, such as a concentrated food product, comprising flavour encapsulates. The flavour encapsulate comprises, based on the weight of the flavour encapsulate: from 99 to 50 wt.% of a melt-extruded core and from 50 to 1 wt.% of a water-insoluble coating around the core. The water-insoluble coating comprises one of the group consisting of, modified cellulose, zein, shellac and mixtures thereof.

The application of zein (a prolamin) in shaped savoury articles has been described in JP 2006020588. This Japanese patent application describes how dry spices and seasonings containing carbohydrates as water absorption enhancers were compressed at 3-1500 kg/cm² and solidified into desired shapes. These shaped articles can be stored at ambient temperature and rapidly form pastes by drop-wise addition of water. The dry products may also contain proteins selected from caseins, glutens, and zeins as binders.

The incorporation of significant quantities of liquid oil in bouillon cubes adversely affects the cohesiveness, hardness and dissolution behaviour of these cubes. Furthermore, bouillon cubes in which vegetable oil is used as the sole fat component tend to suffer from oil exudation.

### SUMMARY OF THE INVENTION

The inventors have developed a shaped savoury concentrate article, such as a bouillon cube, that contains a significant amount of liquid oil, but that does not exhibit the aforementioned defects. The inventors have unexpectedly found that the incorporation of very small prolamin-containing particles in a shaped concentrate article that contains particulate seasoning components in combination with a significant amount of liquid oil effectively minimizes the adverse impact of the liquid oil.

Thus, the present invention provides a shaped savoury concentrate article having a water content of not more than 10 wt.%, said article comprising:
- 50-95 wt.% particulate seasoning components;
- 2-30 wt.% oil, said oil having a solid fat content at 20°C (N₂₀) of less than 20%;
- 2-20 wt.% of prolamin particles having a prolamin content of at least 20 wt.% and sphere equivalent mean diameter of less than 20 µm.

Although the inventors do not wish to be bound by theory, it is believed that the prolamin particles and the oil together form a sticky mass that imparts cohesiveness and hardness to the shaped concentrate article, and that effectively prevents oil exudation.

The invention also provides a process of preparing a shaped savoury concentrate article, said process comprising:
- providing a savoury concentrate mixture having a water content of not more than 10 wt.%, said concentrate mixture containing:
   ∘ 50-95 wt.% particulate seasoning components;
   ∘ 2-30 wt.% oil, said oil having a solid fat content at 20°C (N₂₀) of less than 20%;
   ∘ 2-20 wt.% of prolamin particles having a prolamin content of at least 20 wt.% and a sphere equivalent mean diameter of less than 20 µm.; and
- compressing said savoury concentrate mixture to form a shaped savoury concentrate article.

### DETAILED DESCRIPTION OF THE INVENTION

A first aspect of the invention relates to a shaped savoury concentrate article having a water content of not more than 10 wt.%, said article comprising:
- 50-95 wt.% particulate seasoning components;
- 2-30 wt.% oil, said oil having a solid fat content at 20°C (N₂₀) of less than 20%;
- 2-20 wt.% of prolamin particles having a prolamin content of at least 20 wt.% and a sphere equivalent mean diameter of less than 20 µm

The term "oil" as used herein refers to glycerides selected from triglycerides, diglycerides, monoglycerides, phosphoglycerides and combinations thereof.

The term "prolamin" as used herein refers to water insoluble plant storage proteins that are found in the seeds of cereal grains and that have a high proline and a high glutamine content. Examples of prolamins include gliadin (wheat), hordein (barley), secalin (rye), zein (maize), kafirin (sorghum), rice prolamins and avenin (oat).

The solid fat content at 20°C (N₂₀) can suitably be determined using ISO 8292-1 (2012) - Determination of solid fat content by pulsed NMR.

The sphere equivalent mean diameter of the prolamin particles of the shaped savoury article can suitably be determined using light or fluorescent microscopy images using the methodology that is described in the Examples.

The volume weighted mean diameter of particulate components of the shaped savoury article may be determined using laser diffraction or other techniques known in the art.

Whenever reference is made to the water content of the shaped savoury concentrate article, unless indicated otherwise, what is meant is the total concentration of bound and unbound water that is contained in the article, including, for instance, water that is contained in the particulate seasoning components.

The shaped concentrate article of the present invention typically has a weight in the range of 2 g to 150 g. Preferably, the article has a weight in the range of 2.5-100 g, more preferably in the range of 3.0-40 g and most preferably of 3.2-20 g.

The shaped concentrate article can suitably be provided in different forms. Preferably, the article is provided in the form of a cuboid, more preferably in the form of a rectangular cuboid and most preferably in the form of a cube.

The shaped concentrate article typically contains less than 8 wt.% water. More preferably, the article contains less than 7 wt.% water. Most preferably, the articles contains less than 6 wt.% water.

The particulate seasoning components preferably constitutes 60-94 wt.%, more preferably 70-93 wt.% and most preferably 80-92 wt.% of the shaped savoury concentrate article.

The particulate seasoning components that may suitably be applied in particulate form in the shaped savoury concentrate article of the present invention include salt, glutamate, sugars, flavouring, vegetables, spices, herbs, cheese, dried bouillon powder, dry meat extract, hydrolysed vegetable protein, yeast extract and combinations thereof.

According to a particularly preferred embodiment, the particulate seasoning components contained in the shaped concentrate article includes at least 60% by weight, more preferably at least 65% by weight and most preferably at least 70% by weight of the shaped concentrate article of one or more taste components selected from salt, glutamate and sugar; said salt being selected from sodium chloride, potassium chloride and combinations thereof; said glutamate being selected from sodium glutamate, potassium glutamate and combinations thereof; and said sugar being selected from sucrose, glucose, fructose, lactose and combinations thereof.

The aforementioned one or more particulate seasoning components typically have a volume weighted mean diameter in the range of 5-500 µm, more preferably of 10-250 µm.

Salt typically represents a significant part of the shaped savoury concentrate article of the present invention. Accordingly, the particulate seasoning components in the shaped concentrate article preferably include 20-85% by weight, more preferably 30-80% by weight and most preferably 40-70% by weight of the shaped concentrate article of salt selected from sodium chloride, potassium chloride and combinations thereof.

The shaped concentrate article typically contains a significant amount of glutamate. The particulate seasoning components preferably include 0-25% by weight, more preferably 2-18% by weight and most preferably 3-15% by weight of the shaped concentrate article of glutamate selected from sodium glutamate, potassium glutamate and combinations thereof.

The particulate seasoning components preferably include 0-30% by weight, more preferably 1-20% by weight and most preferably 2-15% by weight of the shaped concentrate article of the sugar, said sugar being selected from sucrose, glucose, fructose, lactose and combinations thereof.

In accordance with another preferred embodiment, the particulate seasoning components of the shaped concentrate article include 0-45% by weight of the shaped concentrate article of vegetable matter selected from vegetables, herbs, spices and combinations thereof. More preferably, said vegetable matter is contained in the shaped article in a concentration of 1-20%, most preferably 2-15% by weight of the shaped article.

Examples of sources of vegetable matter include parsley, dill, basil, chives, sage, rosemary, thyme, oregano, leek, onion, mushrooms, broccoli, cauliflower, tomato, courgette, asparagus, bell pepper, egg plant, cucumber, carrot and coconut flesh. The vegetable matter may be applied in the form of leafs, slices, florets, dices or other pieces.

The prolamin particles preferably are contained in the shaped concentrate article in a concentration of 3 to 18 wt.%, more preferably from 4 to 16 wt.% and most preferably from 4 to 12 wt.%.

The prolamin contained in the prolamin particles is preferably selected from gliadin, hordein, zein, secalin or avenin, kafirin, rice prolamin and combinations thereof. More preferably, the prolamin is selected from gliadin, zein and combinations thereof. Most preferably, the prolamin is zein.

The prolamin particles in the shaped concentrate article typically contain at least 30 wt.%, more preferably at least 50 wt.% and most preferably at least 80 wt.% of prolamin.

The sphere equivalent mean diameter of the prolamin particles preferably is less than 15 µm, even more preferably less than 10 µm and most preferably less than 5 µm. Typically, the prolamin particles have a sphere equivalent mean diameter that exceeds 100 nm.

The prolamin particles may suitably contain other components besides prolamin, such as nutrients, micronutrients and nutraceuticals.

In accordance with an advantageous embodiment, the prolamin particles contain one or more micronutrients, more preferably one or more micronutrients selected from salts of iron, calcium, magnesium and zinc; vitamin D; Vitamin A; Vitamin E; Vitamin K and combinations thereof. According to a particularly preferred embodiment, the prolamin particles contain one or more micronutrients encapsulated in prolamin.

According to another preferred embodiment, the prolamin particles contain one or more nutrients encapsulated in prolamin; for examples carbohydrate (e.g. starch), proteins other than prolamin, and lipids (e.g. trigycerides).

According to another preferred embodiment, the prolamin particles contain one or more water insoluble nutraceuticals (e.g. water insoluble polyphenols).

According to a further preferred embodiment, the prolamin particles contain one or more oil soluble flavours (e.g. etheric oils).

According to yet another advantageous embodiment, the prolamin particles contain one or more food additives such as emulsifiers, thickeners (e.g. starch) or colorants (e.g. curcumin).

The shaped concentrate article of the present invention preferably contains 4-25 wt.%, more preferably 5-20 wt.% and most preferably 6-15 wt.% of oil.

The benefits of the present invention are particularly appreciated in case the oil contained in the shaped concentrate article contains not more than a limited amount of solid fat at ambient temperature. Accordingly, in a preferred embodiment, the having a solid fat content at 20°C (N₂₀) of less than 10%, more preferably of less than 8%, even more preferably of less than 5%, yet more preferably of less than 2%, and most preferably of 0%.

The oil is preferably selected from vegetable oils, marine oils and combinations thereof. More preferably, the oil employed is vegetable oil. Vegetable oils that may suitably be used in the shaped concentrate article include sunflower oil, soybean oil, rapeseed oil, linseed oil, cottonseed oil, maize oil, olive oil, palm oil and combinations thereof. Also fractions of the aforementioned vegetable oils can be employed as well as hydrogenated versions of these same oils.

The oil used in the shaped concentrate article preferably has a high content of unsaturated fatty acid residues as evidenced by an iodine value of more than 60, more preferably of more than 70 and most preferably of more than 80.

Besides the particulate seasoning components, the oil and the prolamin particles, the shaped concentrate article may suitably contain additional ingredients, such as thickeners, emulsifiers, colouring, minerals and vitamins.

The shaped concentrate article preferably contains 0-15 wt.%, more preferably 0-10 wt.%, most preferably 0.2-8 wt.% of a thickener selected from gums, maltodextrin, native starch, modified starch, cereal flour and combinations thereof.

Another aspect of the invention relates to a process of preparing a shaped savoury concentrate article, said process comprising:
- providing a savoury concentrate mixture having a water content of not more than 10 wt.%, said concentrate mixture comprising:
   ∘ 50-95 wt.% particulate seasoning components;
   ∘ 2-30 wt.% oil, said oil having a solid fat content at 20°C (N₂₀) of less than 20%;
   ∘ 2-20 wt.% of prolamin particles having a prolamin content of at least 20 wt.% and a sphere equivalent mean diameter of less than 20 µm; and
- compressing said savoury concentrate mixture to form a shaped savoury concentrate article

The aforementioned process may suitably be employed to produce a shaped savoury concentrate article as described herein before.

The savoury concentrate mixture employed in the present process preferably has the same composition as the shaped savoury concentrate article described herein before.

The prolamin particles employed in the present process preferably have a sphere equivalent diameter of less than 15 µm, more preferably of 10 µm and most preferably of 5 µm. Typically, the prolamin particles have a sphere equivalent mean diameter that exceeds 100 nm.

In one embodiment of the present process, the savoury concentrate mixture is prepared by first combining the particulate seasoning components and the prolamin particles, followed by admixture of the oil.

In another embodiment of the process, the savoury concentrate mixture is prepared by mixing the prolamin particles and the oil to produce a prolamin/oil mixture, followed by mixing the particulate seasoning components with said prolamin/oil mixture.

The compressing of the savoury concentrate mixture to form the shaped articles can be done using equipment known in the art. Examples know techniques that can be used to form the article include tabletting, roller compacting, extrusion, pelletising, etc.

The invention is further illustrated by the following non-limiting examples.

### EXAMPLES

### Determination of sphere equivalent mean diameter

The sphere equivalent mean diameter of prolamin particles is determined as follows:
- Prolamin powder is dispersed in soybean oil (SigmaAldrich S7381) to produce a suspension containing 0.5 wt.% prolamin powder, and the suspension is mixed using a Vortex, operated at 3500 rpm for 5 minutes.
- The suspension is degassed for 10 min in a vacuum chamber (100 mbar) and is mildly homogenized with a spatula.
- Light microscopy pictures are taken of the suspension using a Leica microscope, model DM6000B, and objective HCX PL APO 100x, 1.40 immersion oil.
- Fluorescent images of the particles are taken using an inverted laser-scanning confocal microscope (Leica TCS-SP5 with the DMI6000) For fluorescent imaging of the sample, Nile Red is used (10⁻³ parts of 1%wt Nile red in soybean oil). Fluorescent images are obtained with excitations at 488 nm and 633 nm, probing the Nile red local environment of oil and protein, respectively.
- From the light and fluorescent microscopy images, the sphere equivalent average diameter of the particles is determined as follows;
   ∘ The pixel size is calculated into nm, based on the scale bar as provided of the obtained pictures.
   ∘ Then the images were processed with software ImageJ (an open source image processing program available from http://imagej.net/). The raw pictures were transformed into binary colors (black and white) which were then used as an input, to a build in routine (particle size) in order to obtain the diameter of each particle on each picture.
   ∘ The routine provides as an output a table with the sphere equivalent average diameter of each particle (black areas) in pixel units.
   ∘ Finally form the output table, by using the pixel size in nm as described before, it was calculated the size of each particle for each picture. The same process was performed for 20 images per sample from which we obtain the sphere equivalent average diameter of the particles by just averaging all the values.

### Preparation of prolamin particles

Prolamin particles having a sphere equivalent mean diameter of approximately 1 µm were prepared as follows:
A 2.5 wt.% zein solution in ethanol/water (80/20 w/w) was spray dried using a Buchi B-290 mini spray drier, operating with a solvent trap (-22 °C), using a 1.5 mm two-fluid nozzle having an atomizing pressure of 2 bars with an inlet temperature of 165 °C. The inlet (controlled) and outlet (measured) air temperatures were 165 °C and 90-81 °C, respectively. The spray-dried powder was collected from the cyclone.

Zein (Z3625) was obtained from SigmaAldrich. Absolute ethanol was obtained from VWR and quality of water used was miliQ (Nanopure Diamond).

### Example 1

Bouillon cubes were prepared using the procedure described below.

A base mix was prepared on the basis of the recipe shown in Table 1.

**Table 1**

| **Ingredient** | **Wt.%** |
|---|---|
| NaCl | 60.01 |
| Monosodium glutamate | 16.16 |
| Sugar | 17.31 |
| Corn starch | 6.52 |

The ingredients were mixed together using a Kenwood Chef Classic equipped with a K-beater.

Next, the savoury concentrate mixtures were prepared on the basis of the recipes shown in Table 2.

**Table 2**

| | **Wt.%** | | | |
|---|---|---|---|---|
| **Ingredient** | **1** | **2** | **3** | **4** |
| Base mix | 92 | 92 | 92 | 84 |
| Spray dried zein particles | 2 | 4 | 6 | 8 |
| Sunflower oil | 6 | 4 | 2 | 8 |

The savoury concentrate mixture was prepared introducing the base mix and the zein particles into a bowl, followed by mixing with a top mixer, using a small rotor (3 minutes at 100 rpm). Next, the sunflower oil was added, followed by mixing for 2 minutes and at 200 rpm. After the mixing a small spoon was used to stir the mixture until it was completely homogeneous.

The savoury concentrate mixtures so obtained were pressed into cubes of 4 grams each, using a stainless steel mould and a pressure of 4 kN.

The bouillon cubes so obtained were stored under ambient conditions for one day before being subjected to hardness measurements. These hardness measurements were carried out using a SMS TA-XT Plus Texture Analyzer (Stable Micro Systems Ltd.), with a 1" perspex probe.

The results of these measurements are shown in Table 3.

**Table 3**

| | **Hardness (in kg)** |
|---|---|
| **1** | 8.4 |
| **2** | 10.9 |
| **3** | 8.6 |
| **4** | 13.2 |

The bouillon cubes did not exhibit significant oil exudation.

### Comparative Example 1

Example 1 was repeated, except that this time the savoury concentrate mixtures were prepared on the basis of the recipes shown in Table 4.

**Table 4**

| | **Wt.%** | |
|---|---|---|
| **Ingredient** | **A** | **B** |
| Base mix | 92 | 92 |
| Sunflower oil | 8 | |
| Palm stearin (IV = 53) | | 8 |

The results of the hardness measurements are shown in Table 5.

**Table 5**

| | **Hardness (in kg)** |
|---|---|
| **A** | 3.9 |
| **B** | 21.1 |

### Comparative Example 2

Example 1 was repeated, except that this time the savoury concentrate mixtures were prepared on the basis of the recipes shown in Table 6.

**Table 6**

| | **Wt.%** | |
|---|---|---|
| **Ingredient** | **C** | **D** |
| Base mix | 92 | 84 |
| Zein particles¹ | 4 | 8 |
| Sunflower oil | 4 | 8 |

| | | |
|---|---|---|
| 1 ex Sigma (sphere equivalent mean diameter appr. 40 µm) | | |

The results of the hardness measurements are shown in Table 7.

**Table 7**

| | **Hardness (in kg)** |
|---|---|
| **C** | 2.7 |
| **D** | 2.0 |

### Example 3

The savoury concentrate mixtures were prepared as described in Example 1, except that the savoury concentrates were prepared on the basis of the recipes shown in Table 8.

**Table 8**

| | **Examples** | | **Comparative examples** | |
|---|---|---|---|---|
| **Ingredient** | **5 (wt.%)** | **6 (wt.%)** | **E (wt.%)** | **F (wt.%)** |
| Base mix | 84 | 83.2 | 84 | 83.2 |
| Spray dried zein particles ¹ | 8 | 7.9 | | |
| Spray dried maltodextrin particles ² | | | 8 | 7.9 |
| Sunflower oil | 8 | 7.9 | 8 | 7.9 |
| Water | | 1 | | 1 |

| | | | | |
|---|---|---|---|---|
| ¹The spray dried zein particles were spray dried as described above example 1 ² The spray dried maltodextrin particles were prepared according to the method below | | | | |

The spray dried maltodextrin particles were prepared as described for the zein particles above example 1, except, that the maltodextrin was provided in a 2.5 wt.% maltodextrin solution in water without ethanol. The obtained maltodextrin particles had a sphere equivalent mean diameter in a similar size range as the obtained zein particles.

The effect of the degree of cohesiveness of the savoury concentrates on oil exudation was quantified by accessing the oil transfer from the so obtained bouillon cubes to a paper substrate. If oil is not well bound into the cubes it will wet the paper and leave spots. The larger the total surface area of spots the more oil exudation is observed.

The bouillon cubes so obtained were placed on a paper substrate for 2 minutes under ambient conditions. Digital images of oil traces were made in order to quantify the total surface area of the oily spots.

Imaging software ImageJ was applied to threshold the oily spots and to measure the total surface area of the oily spots. The results of the measurements are shown in Table 9.

**Table 9**

| | **Surface area (pixel²)** | **Surface area (mm²)** |
|---|---|---|
| 5 | 536 | 11.49 |
| 6 | 109 | 2.34 |
| E | 1600 | 34.31 |
| F | 758 | 16.26 |

## Claims

1. A shaped savoury concentrate article having a water content of not more than 10 wt.%, said article comprising:
• 50-95 wt.% particulate seasoning components;
• 2-30 wt.% oil, said oil having a solid fat content at 20°C (N₂₀) of less than 20%;
• 2-20 wt.% of prolamin particles having a prolamin content of at least 20 wt.% and a sphere equivalent mean diameter of less than 20 µm.

2. Shaped concentrate article according to claim 1, wherein the shaped concentrate article has a weight of 2-150 g.

3. Shaped concentrate article according to claim 1 or 2, wherein the concentrate article contains less than 8 wt.% water.

4. Shaped concentrate article according to any one of the preceding claims, wherein the particulate seasoning components includes at least 60% by weight of the shaped concentrate article of one or more taste components selected from salt, glutamate and sugar; said salt being selected from sodium chloride, potassium chloride and combinations thereof; said glutamate being selected from sodium glutamate, potassium glutamate and combinations thereof; and said sugar being selected from sucrose, glucose, fructose, lactose and combinations thereof.

5. Shaped concentrate article according to any one of the preceding claims, wherein the one or more seasoning components have a volume weighted mean diameter in the range of 5-500 µm.

6. Shaped concentrate article according to any one of the preceding claims, wherein the particulate seasoning components include 20-85% by weight, preferably 30-80% by weight and more preferably 40-70%% by weight of the shaped concentrate article of salt selected from sodium chloride, potassium chloride and combinations thereof.

7. Shaped concentrate article according to any one of the preceding claims, wherein the particulate seasoning components includes 0-25% by weight, preferably 2-18% by weight and more preferably 3-15% by weight of the shaped concentrate article of glutamate selected from sodium glutamate, potassium glutamate and combinations thereof.

8. Shaped concentrate article according to any one of the preceding claims, wherein the particulate seasoning components includes 0-30% by weight, preferably 1-20% by weight and more preferably 2-15% by weight of the shaped concentrate article of the sugar, said sugar being selected from sucrose, glucose, fructose, lactose and combinations thereof.

9. Shaped concentrate article according to any one of the preceding claims, wherein the prolamin particles have a sphere equivalent mean diameter of less than 10 µm, more preferably of less than 5 µm.

10. Shaped concentrate article according to any one of the preceding claims, wherein the prolamin particles contain at least 30 wt.%, preferably at least 50 wt.%, more preferably at least 80 wt.% of prolamin.

11. Shaped concentrate article according to any one of the preceding claims, wherein the prolamin is selected from gliadin, hordein, zein, secalin or avenin, kafirin, rice prolamin and combinations thereof.

12. Shaped article according to any one of the preceding claims, wherein the article contains 4-25 wt.%, preferably 5-20 wt.%, more preferably 6-15 wt.% of oil.

13. Shaped concentrate article according to any one of the preceding claims, wherein the oil has a solid fat content at 20°C (N₂₀) of less than 10%, preferably of less than 8%, more preferably of less than 5%.

14. A process of preparing a shaped savoury concentrate article, said process comprising:
• providing a savoury concentrate mixture having a water content of not more than 10 wt.%, said concentrate mixture containing:
∘ 50-95 wt.% particulate seasoning components;
∘ 2-30 wt.% oil, said oil having a solid fat content at 20°C (N₂₀) of less than 20%;
∘ 2-20 wt.% of prolamin particles having a prolamin content of at least 20 wt.% and a sphere equivalent mean diameter of less than 20 µm; and
• compressing said savoury concentrate mixture to form a shaped savoury concentrate article.

15. Process according to claim 14, wherein the process yields a shaped concentrate article according to any one of claims 1-13.

## Patentansprüche

1. Geformter wohlschmeckender Konzentratartikel mit einem Wassergehalt von nicht mehr als 10 Gew.-%, wobei der Artikel umfasst:
• 50-95 Gew.-% teilchenförmige Gewürzbestandteile;
• 2-30 Gew.-% Öl, wobei das Öl einen Festfettgehalt bei 20°C (N₂₀) von weniger als 20% aufweist,
• 2-20 Gew.-% Prolamin-Teilchen mit einem Prolamin-Gehalt von mindestens 20 Gew.-% und einem kugeläquivalenten Durchschnittsdurchmesser von weniger als 20 µm.

2. Geformter Konzentratartikel nach Anspruch 1, wobei der geformte Konzentratartikel ein Gewicht von 2-150 g aufweist.

3. Geformter Konzentratartikel nach Anspruch 1 oder 2, wobei der Konzentratartikel weniger als 8 Gew.-% Wasser enthält.

4. Geformter Konzentratartikel nach irgendeinem der vorhergehenden Ansprüche, wobei die teilchenförmigen Gewürzbestandteile mindestens 60 Gewichts-% des geformten Konzentratartikels an einem oder mehreren Geschmacksbestandteilen einbeziehen, die aus Salz, Glutamat und Zucker ausgewählt sind; wobei das Salz aus Natriumchlorid, Kaliumchlorid und Kombinationen davon ausgewählt ist, das Glutamat aus Natriumglutamat, Kaliumglutamat und Kombinationen davon ausgewählt ist und der Zucker aus Sucrose, Glucose, Fructose, Lactose und Kombinationen davon ausgewählt ist.

5. Geformter Konzentratartikel nach irgendeinem der vorhergehenden Ansprüche, wobei das eine oder die mehreren Gewürzbestandteile einen volumengewichteten mittleren Durchmesser in dem Bereich von 5-500 µm aufweisen.

6. Geformter Konzentratartikel nach irgendeinem der vorhergehenden Ansprüche, wobei die teilchenförmigen Gewürzbestandteile 20-85 Gewichts-%, vorzugsweise 30-80 Gewichts-% und bevorzugter 40-70 Gewichts-% des geformten Konzentratartikels an Salz einbeziehen, ausgewählt aus Natriumchlorid, Kaliumchlorid und Kombinationen davon.

7. Geformter Konzentratartikel nach irgendeinem der vorhergehenden Ansprüche, wobei die teilchenförmigen Gewürzbestandteile 0-25 Gewichts-%, vorzugsweise 2-18 Gewichts-% und bevorzugter 3-15 Gewichts-% des geformten Konzentratartikels an Glutamat einbeziehen, ausgewählt aus Natriumglutamat, Kaliumglutamat und Kombinationen davon.

8. Geformter Konzentratartikel nach irgendeinem der vorhergehenden Ansprüche, wobei die teilchenförmigen Gewürzbestandteile 0-30 Gewichts-%, vorzugsweise 1-20 Gewichts-% und bevorzugter 2-15 Gewichts-% des geformten Konzentratartikels an Zucker einbeziehen, wobei der Zucker aus Sucrose, Glucose, Fructose, Lactose und Kombinationen davon ausgewählt ist.

9. Geformter Konzentratartikel nach irgendeinem der vorhergehenden Ansprüche, wobei die Prolamin-Teilchen einen kugeläquivalenten Durchschnittsdurchmesser von weniger als 10 µm, bevorzugter von weniger als 5 µm aufweisen.

10. Geformter Konzentratartikel nach irgendeinem der vorhergehenden Ansprüche, wobei die Prolamin-Teilchen mindestens 30 Gew.-%, vorzugsweise mindestens 50 Gew.-%, bevorzugter mindestens 80 Gew.-% Prolamin enthalten.

11. Geformter Konzentratartikel nach irgendeinem der vorhergehenden Ansprüche, wobei das Prolamin aus Gliadin, Hordein, Zein, Secalin oder Avenin, Kafirin, Reisprolamin und Kombinationen davon ausgewählt ist.

12. Geformter Artikel nach irgendeinem der vorhergehenden Ansprüche, wobei der Artikel 4-25 Gew.-%, vorzugsweise 5-20 Gew.-%, bevorzugter 6-15 Gew.-% Öl enthält.

13. Geformter Konzentratartikel nach irgendeinem der vorhergehenden Ansprüche, wobei das Öl einen Festfettgehalt bei 20°C (N₂₀) von weniger als 10%, vorzugsweise von weniger als 8%, bevorzugter von weniger als 5% aufweist.

14. Verfahren zur Herstellung eines geformten wohlschmeckenden Konzentratartikels, wobei das Verfahren umfasst:
• Bereitstellen einer wohlschmeckenden Konzentratmischung mit einem Wassergehalt von nicht mehr als 10 Gew.-%, wobei die Konzentratmischung enthält:
∘ 50-95 Gew.-% teilchenförmige Gewürzbestandteile;
∘ 2-30 Gew.-% Öl, wobei das Öl einen Festfettgehalt bei 20°C (N₂₀) von weniger als 20% aufweist;
∘ 2-20 Gew.-% Prolamin-Teilchen mit einem Prolamin-Gehalt von mindestens 20 Gew.-% und einem kugeläquivalenten Durchschnittsdurchmesser von weniger als 20 µm; und
• Komprimieren der wohlschmeckenden Konzentratmischung, um einen geformten wohlschmeckenden Konzentratartikel zu formen.

15. Verfahren nach Anspruch 14, wobei das Verfahren einen geformten Konzentratartikel nach irgendeinem der Ansprüche 1 bis 13 ergibt.

## Revendications

1. Article de concentré savoureux façonné ayant une teneur en eau d'au plus 10 % en masse, ledit article comprenant :
• 50-95 % en masse de constituants d'assaisonnement particulaires ;
• 2-30 % en masse d'huile, ladite huile ayant une teneur en graisse solide à 20°C (N₂₀) inférieure à 20 % ;
• 2-20 % en masse de particules de prolamine ayant une teneur en prolamine d'au moins 20 % en masse et un diamètre moyen équivalent de sphère inférieur à 20 µm.

2. Article de concentré façonné selon la revendication 1, dans lequel l'article de concentré façonné présente une masse de 2-150 g.

3. Article de concentré façonné selon la revendication 1 ou 2, dans lequel l'article de concentré contient moins de 8 % en masse d'eau.

4. Article de concentré façonné selon l'une quelconque des revendications précédentes, dans lequel les constituants d'assaisonnement particulaires comprennent au moins 60 % en masse de l'article de concentré façonné d'un ou plusieurs constituants de goût choisis parmi un sel, un glutamate et un sucre ; ledit sel étant choisi parmi le chlorure de sodium, chlorure de potassium et des combinaisons de ceux-ci ; ledit glutamate étant choisi parmi le glutamate de sodium, glutamate de potassium et des combinaisons de ceux-ci ; et ledit sucre étant choisi parmi le saccharose, glucose, fructose, lactose et des combinaisons de ceux-ci.

5. Article de concentré façonné selon l'une quelconque des revendications précédentes, dans lequel les un ou plusieurs constituants d'assaisonnement présentent un diamètre moyen pondéré en volume dans l'intervalle de 5-500 µm.

6. Article de concentré façonné selon l'une quelconque des revendications précédentes, dans lequel les constituants d'assaisonnement particulaires comprennent 20-85 % en masse, de préférence 30-80 % en masse et encore mieux 40-70 % en masse de l'article de concentré façonné de sel choisi parmi le chlorure de sodium, chlorure de potassium et des combinaisons de ceux-ci.

7. Article de concentré façonné selon l'une quelconque des revendications précédentes, dans lequel les constituants d'assaisonnement particulaires comprennent 0-25 % en masse, de préférence 2-18 % en masse et encore mieux 3-15 % en masse de l'article de concentré façonné de glutamate choisi parmi le glutamate de sodium, glutamate de potassium et des combinaisons de ceux-ci.

8. Article de concentré façonné selon l'une quelconque des revendications précédentes, dans lequel les constituants d'assaisonnement particulaires comprennent 0-30 % en masse, de préférence 1-20 % en masse et encore mieux 2-15 % en masse de l'article de concentré façonné du sucre, ledit sucre étant choisi parmi le saccharose, glucose, fructose, lactose et des combinaisons de ceux-ci.

9. Article de concentré façonné selon l'une quelconque des revendications précédentes, dans lequel les particules de prolamine présentent un diamètre moyen équivalent de sphère inférieur à 10 µm, encore mieux inférieur à 5 µm.

10. Article de concentré façonné selon l'une quelconque des revendications précédentes, dans lequel les particules de prolamine contiennent au moins 30 % en masse, de préférence au moins 50 % en masse, encore mieux au moins 80 % en masse de prolamine.

11. Article de concentré façonné selon l'une quelconque des revendications précédentes, dans lequel la prolamine est choisie parmi la gliadine, l'hordéine, la zéine, la sécaline ou l'avénine, la kafirine, la prolamine de riz et des combinaisons de celles-ci.

12. Article façonné selon l'une quelconque des revendications précédentes, dans lequel l'article contient 4-25 % en masse, de préférence 5-20 % en masse, encore mieux 6-15 % en masse d'huile.

13. Article de concentré façonné selon l'une quelconque des revendications précédentes, dans lequel l'huile présente une teneur en graisse solide à 20°C (N₂₀) inférieure à 10 %, de préférence inférieure à 8 %, encore mieux inférieure à 5 %.

14. Procédé de préparation d'un article de concentré savoureux façonné, ledit procédé comprenant :
• la fourniture d'un mélange de concentré savoureux ayant une teneur en eau d'au plus 10 % en masse, ledit mélange de concentré contenant :
∘ 50-95 % en masse de constituants d'assaisonnement particulaires ;
∘ 2-30 % en masse d'huile, ladite l'huile ayant une teneur en graisse solide à 20°C (N₂₀) inférieure à 20 % ;
∘ 2-20 % en masse de particules de prolamine ayant une teneur en prolamine d'au moins 20 % en masse et un diamètre moyen équivalent de sphère inférieur à 20 µm ; et
• la compression dudit mélange de concentré savoureux pour former un article de concentré savoureux façonné.

15. Procédé selon la revendication 14, dans lequel le procédé produit un article de concentré façonné selon l'une quelconque des revendications 1-13.
